# EUROPEAN PATENT APPLICATION

(11) **EP 2 725 804 A1**
(43) Date of publication of application: **30.04.2014**
(21) Application number: 13782073.4
(22) Date of filing: 15.03.2013
(51) Int. Cl.: H04N 13/00, H04N 7/173, H04N 7/26

(54) **IMAGE DATA TRANSMISSION DEVICE, IMAGE DATA TRANSMISSION METHOD, IMAGE DATA RECEPTION DEVICE, AND IMAGE DATA RECEPTION METHOD**

(30) Priority: 24.04.2012 JP 2012099316
(71) Applicant: Sony Corporation, Tokyo 108-0075 (JP)
(72) Inventor: TSUKAGOSHI, Ikuo, Minato-Ku Tokyo 108-0075 (JP)
(74) Representative: Ealey, Douglas Ralph
(86) International application number: PCT/JP2013/057559
(87) International publication number: WO 2013/161442

(57) **Abstract**

To enable a reception side to reliably and easily identify before performing decoding whether substreams are configured such that they are constituted by a single video stream or a plurality of video streams.

When transmitting a container having a predetermined format which contains a base video stream including first image data and a predetermined number of items of second image data related to this first image data, specific information is inserted into a position in a layer of this container at which information related to the base video stream is located. When transmitting a container having a predetermined format which contains a base video stream including first image data and a predetermined number of extended video streams including a predetermined number of respective items of second image data related to this first image data, specific information is inserted into a position in a layer of this container at which information related to each of the predetermined number of extended video streams is located.

## Description

### Technical Field

The present technology relates to an image data transmitting apparatus, an image data transmitting method, an image data receiving apparatus, and an image data receiving method, and more particularly, to an image data transmitting apparatus, and so on, for transmitting image data for performing three-dimensional image display, scalable coded image data, and so on.

### Background Art

Hitherto, as a coding method for moving pictures, H. 264/AVC (Advanced Video Coding) is known (see NPL 1). Additionally, as an extension of this H. 264/AVC, H. 264/MVC (Multi-view Video Coding) is known (see NPL 2).

In MVC, a mechanism in which items of multi-view image data are coded together is employed. In MVC, multi-view image data is coded as one item of base view image data and more than one item of non-baseview image data.

Additionally, as an extension of this H. 264/AVC, H. 264/SVC (Scalable Video Coding) is also known (see NPL 3). SVC is a technique for coding images hierarchically. In SVC, hierarchical levels are divided into a basic level (bottommost level) including image data necessary for decoding moving pictures with a minimal quality and an extended level (higher level), which is added to this basic level, including image data for improving the quality of moving pictures.

### Citation List

### Non Patent Literature

NPL 1: "Draft Errata List withRevision-Marked Corrections for H. 264/AVC", JVT-1050, Thomas Wiegand et al., Joint Video Team (JVT) of ISO/IEC MPEG & ITU-T VCEG, 2003
NPL 2: Joint Draft 4.0 on MultiviewVideo Coding, Joint Video Team of ISO/IEC MPEG & ITU-T VCEG, JVT-X209, July2007
NPL 3: Heiko Schwarz, Detlev Marpe, andThomas Wiegand, "Overview of the Scalable Video CodingExtension of the H. 264/AVC Standard", IEEETRANSACTIONS ON CIRCUITS AND SYSTEMS FOR VIDEO TECHNOLOGY, VOL. 17, NO. 9, SEPTEMBER 2007, pp. 1103-1120.

### Summary of Invention

### Technical Problem

In the case of MVC, it is known that a base video stream obtained by coding image data of a base view as one picture and a predetermined number of extended video streams, each being obtained by coding an item of image data of a non-baseview as one picture, are transmitted in a transport stream. Moreover, in the case of MVC, it is also known that a base video stream obtained by coding image data of a base view and a predetermined number of items of image data of non-baseviews as one stream is transmitted in a transport stream, which serves as a container.

When there are a plurality of video streams in a transport stream, that is, when substreams are configured such that they are constituted by a plurality of streams, it is necessary that the streams be processed in synchronization with each other. Also, in this case, although the bit rate is different among the video streams since a change in the rate is independent of each other, it is demanded in the overall transport stream that rate control be performed, such as in a constant bit rate or a variable bit rate, in accordance with the system requirements. Also, in this case, during random access, it is necessary to smoothly locate the start of a plurality of streams (mainly I pictures), and thus, an advanced technique is necessary for multiplexing a plurality of video streams.

On the other hand, when only one video stream is present in a transport stream, that is, when a plurality of substreams are configured such that they are constituted by one video stream, items of coded data of image data of individual views are interconnected as each group of, for example, access unit, and it is possible to decode and display the coded data by each group represented by the access unit. Accordingly, less consideration is given to synchronizing processing and random access.

Additionally, it is possible to perform simple multiplexing, such as performing rate control by considering a group of a plurality of pictures as a single large picture, thereby achieving an advantage of facilitating control from encoding to multiplexing as a whole. Because of this, a transmission side, in particular, may determine that it is easier to handle if only one video stream is present in a transport stream.

It is an object of the present technology to facilitate processing in a reception side by enabling the reception side to reliably and easily identify before performing decoding whether substreams are configured such that they are constituted by a single video stream or a plurality of video streams.

### Solution to Problem

A concept of the present technology is an image data transmitting apparatus including: a transmitting unit that transmits a container having a predetermined format which contains a base video stream including first image data and a predetermined number of items of second image data related to the first image data; and an information inserting unit that inserts specific information into a position in a layer of the container at which information related to the base video stream is located.

In the present technology, a container having a predetermined format which contains a base video stream including first image data and a predetermined number of items of second image data related to this first image data is transmitted by the transmitting unit. For example, the container may be a transport stream (MPEG-2 TS) employed in the digital broadcasting standards. Further, for example, the container may be a container of MP4 used in the Internet distribution or a container having a format other than MP4. Specific information is inserted, by the information inserting unit, into a position in a layer of the container at which information related to the base video stream is located.

Note that, in the present technology, for example, the specific information may be a descriptor having information concerning the first image data and the predetermined number of items of second image data. Moreover, in the present technology, for example, the container may be a transport stream, and the information inserting unit may insert the descriptor into a descriptor portion of a video elementary loop corresponding to the base video stream under a program map table.

Moreover, in the present technology, for example, the first image data may be image data of a base view for performing three-dimensional image display, the second image data may be image data of a view other than the base view for performing the three-dimensional image display, and the descriptor may be an MVC extension descriptor having information concerning each of the views.

Moreover, in the present technology, for example, the first image data may be image data of a bottommost hierarchical level which forms scalable coded image data, the second image data may be image data of a hierarchical level other than the bottommost hierarchical level which forms the scalable coded image data, and the descriptor may be an SVC extension descriptor having information concerning the image data of each of the hierarchical levels.

In this manner, in the present technology, when transmitting a container having a predetermined format which contains a base video stream including first image data and a predetermined number of items of second image data related to this first image data, specific information is inserted into a position in a layer of the container at which information related to the base video stream is located.

Accordingly, it is possible for a reception side to reliably and easily identify that this container contains a base video stream including first image data and a predetermined number of items of second image data related to this first image data. Then, this enables the reception side to precisely determine, before performing decoding, the configuration of a buffer memory when decoding is performed and a decode mode and a display mode.

Further, another concept of the present technology is an image data transmitting apparatus including: a transmitting unit that transmits a container having a predetermined format which contains a base video stream including first image data and a predetermined number of extended video streams including a predetermined number of respective items of second image data related to the first image data; and an information inserting unit that inserts specific information into a position in a layer of the container at which information related to each of the predetermined number of extended video streams is located.

In the present technology, a container having a predetermined format which contains a base video stream including first image data and a predetermined number of extended video streams including a predetermined number of respective items of second image data related to the first image data is transmitted. For example, the container may be a transport stream (MPEG-2 TS) employed in the digital broadcasting standards. Further, for example, the container may be a container of MP4 used in the Internet distribution or a container having a format other than MP4. Specific information is inserted, by the information inserting unit, into a position in a layer of the container at which information related to the base video stream is located.

In the present technology, for example, the specific information may be a descriptor having information concerning the first image data and the predetermined number of items of second image data. Moreover, in the present technology, the container may be a transport stream, and the information inserting unit may insert the descriptor into a descriptor portion of a video elementary loop corresponding to the base video stream under a program map table.

Note that, in the present technology, for example, the first image data may be image data of a base view for performing three-dimensional image display, the second image data may be image data of a view other than the base view for performing the three-dimensional image display, and the descriptor may be an MVC extension descriptor having information concerning each of the views.

Moreover, in the present technology, for example, the first image data may be image data of a bottommost hierarchical level which forms scalable coded image data, the second image data may be image data of a hierarchical level other than the bottommost hierarchical level which forms the scalable coded image data, and the descriptor may be an SVC extension descriptor having information concerning the image data of each of the hierarchical levels.

In this manner, in the present technology, when transmitting a container having a predetermined format which contains a base video stream including first image data and a predetermined number of extended video streams including a predetermined number of respective items of second image data related to this first image data, specific information is inserted into a position in a layer of the container at which information related to each of the predetermined number of extended video streams is located.

Accordingly, it is possible for a reception side to reliably and easily identify that this container contains a base video stream which includes a base video stream including first image data and a predetermined number of extended video streams including a predetermined number of respective items of second image data related to this first image data. Then, this enables the reception side to precisely determine, before performing decoding, the configuration of a buffer memory when decoding is performed and a decode mode and a display mode.

Further, another concept of the present technology is an image data receiving apparatus including: a receiving unit that receives a container having a predetermined format; and a processing unit that processes, on the basis of the presence and an insertion position of specific information in a layer of the container, a video stream contained in the container so as to obtain a predetermined number of items of image data related to each other.

In the present technology, a container having a predetermined format is received by the receiving unit. Then, on the basis of the presence and an insertion position of specific information in a layer of the container, a video stream contained in this container is processed by the processing unit, and a predetermined number of items of image data related to each other are obtained by the processing unit. For example, the predetermined number of items of image data may form image data for performing three-dimensional image display or image data of scalable coded data.

Note that, in the present technology, for example, when the specific information is inserted into a position in a layer of the container at which information related to a base video stream contained in this container is located, the processing unit may process this base video stream so as to obtain the predetermined number of items of image data. Moreover, in the present technology, for example, when the specific information is inserted into a position in a layer of the container at which information related to an extended video stream contained in this container is located, the processing unit may process this extended video stream and a base video stream contained in this container so as to obtain the predetermined number of items of image data.

In this manner, in the present technology, on the basis of the presence and an insertion position of specific information in a layer of the container, a video stream contained in this container is processed, and a predetermined number of items of image data related to each other are obtained. In this case, it is possible to precisely determine, before performing decoding, the configuration of a buffer memory when decoding is performed and a decode mode and a display mode, thereby making it possible to obtain image data smoothly.

### Advantageous Effects of Invention

According to the present technology, it is possible for a reception side to reliably and easily identify before performing decoding whether substreams are configured such that they are constituted by a single video stream or a plurality of video streams.

### Brief Description of Drawings

[Fig. 1] Fig. 1 is a block diagram illustrating an example of the configuration of an image transmitting/receiving system, which serves as an embodiment of this invention.
[Fig. 2] Fig. 2 is a diagram illustrating an example of the structure (Syntax) of an MVC extension descriptor.
[Fig. 3] Fig. 3 is a block diagram illustrating an example of the configuration of a transmission data generator, which is disposed in a broadcasting station, forming the image transmitting/receiving system.
[Fig. 4] Fig. 4 shows diagrams schematically illustrating that an MVC extension descriptor is inserted in association with a base video stream and an extended video stream.
[Fig. 5] Fig. 5 is a diagram illustrating an example of the configuration (Syntax) of an NAL unit header (NAL unit header MVC extension).
[Fig. 6] Fig. 6 is a diagram illustrating an example of the configuration of a transport stream TS when two-dimensional (2D) images are transmitted.
[Fig. 7] Fig. 7 is a diagram illustrating an example of the configuration of a transport stream TS when three-dimensional (3D) images are transmitted.
[Fig. 8] Fig. 8 is a diagram illustrating an example of the configuration of a transport stream TS when three-dimensional (3D) images are transmitted.
[Fig. 9] Fig. 9 is a block diagram illustrating an example of the configuration of a receiver which forms the image transmitting/receiving system.
[Fig. 10] Fig. 10 is a flowchart illustrating an example of control processing executed by a CPU on the basis of the presence and an insertion position of an MVC extension descriptor.
[Fig. 11] Fig. 11 shows diagrams schematically illustrating flows of processing executed by a receiver when various signals are received.
[Fig. 12] Fig. 12 is a diagram illustrating an example of the structure (Syntax) of an SVC extension descriptor.
[Fig. 13] Fig. 13 is a diagram illustrating an example of the configuration (Syntax) of an NAL unit header (NAL unit header SVC extension).
[Fig. 14] Fig. 14 is a block diagram illustrating an example of the configuration of a receiver which handles an SVC stream.

### Description of Embodiments

Hereinafter, a mode for carrying out the present technology (hereinafter referred to as an "embodiment") will be described. A description will be given in the following order.
1. Embodiment
2. Modified Example

### <1. Embodiment>

### [Image Transmitting/Receiving System]

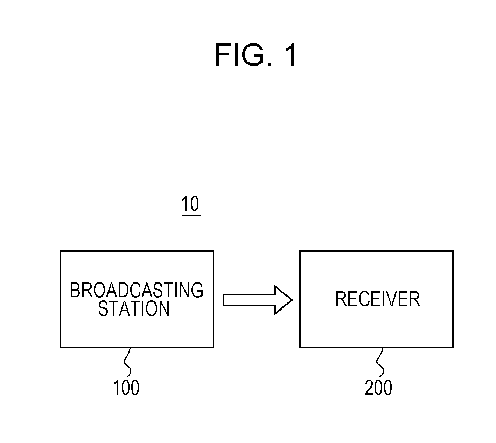

Fig. 1 illustrates an example of the configuration of an image transmitting/receiving system 10, which serves as an embodiment. This image transmitting/receiving system 10 includes a broadcasting station 100 and a receiver 200. The broadcasting station 100 transmits, through broadcast waves, a transport stream TS, which serves as a container.

When transmitting two-dimensional (2D) images, a video stream including two-dimensional image data is contained in a transport stream TS. In this case, the video stream is transmitted as an AVC (2D) video elementary stream.

When transmitting three-dimensional (3D) images, one video stream including image data of a base view for performing three-dimensional image display and items of image data of a predetermined number of views other than the base view may be contained in a transport steam TS. That is, this is a case in which substreams are configured such that they are constituted by a single video stream. In this case, the video stream obtained by coding image data of a base view and items of image data of predetermined number of non-baseviews as one picture is transmitted as an MVC video elementary stream (base video stream).

In this case, at a position in a layer of the transport stream TS at which information related to the above-described base video stream is located, specific information, for example, a descriptor having information concerning items of image data of the individual views, is inserted.
In this embodiment, an MVC extension descriptor (MVC_extension_descriptor) is inserted into a descriptor portion of a video elementary loop corresponding to the base video stream under a program map table.

By inserting the MVC extension descriptor in this manner, a reception side is able to identify that three-dimensional (3D) transmission is being performed and that substreams are configured such that they are constituted by a single video stream. That is, the reception side is able to identify that the transport stream TS contains a base video stream including image data of a base view for performing three-dimensional image display and items of image data of a predetermined number of views other than the base view.

On the other hand, when transmitting three-dimensional (3D) images, a base video stream including image data of a base view for performing three-dimensional image display and a predetermined number of extended video streams including respective items of image data of a predetermined number of views other than the base view may be contained in a transport steam TS. That is, this is a case in which substreams are configured such that they are constituted by a plurality of streams.

In this case, the video stream obtained by coding the image data of a base view as one picture is transmitted as an MVC base-view video elementary stream (base video stream). Moreover, the predetermined of number of items of video streams, each being obtained by coding an item of image data of a non-baseview as one picture, are transmitted as MVC non-baseview video elementary streams (extended video streams).

In this case, at a position in a layer of the transport stream TS at which an item of information related to each of the above-described predetermined number of extended video streams is located, specific information, for example, a descriptor having an item of information concerning image data of each view, is inserted. In this embodiment, an MVC extension descriptor (MVC_extension_descriptor) is inserted into a descriptor portion of a video elementary loop corresponding to an extended video stream under a program map table.

By inserting the MVC extension descriptor in this manner, a reception side is able to identify that three-dimensional (3D) transmission is being performed and that substreams are configured such that they are constituted by a plurality of streams. That is, the reception side is able to identify that the transport stream TS contains a base video stream including image data of a base view for performing three-dimensional image display and a predetermined number of extended video streams including respective items of image data having a predetermined number of views other than the base view.

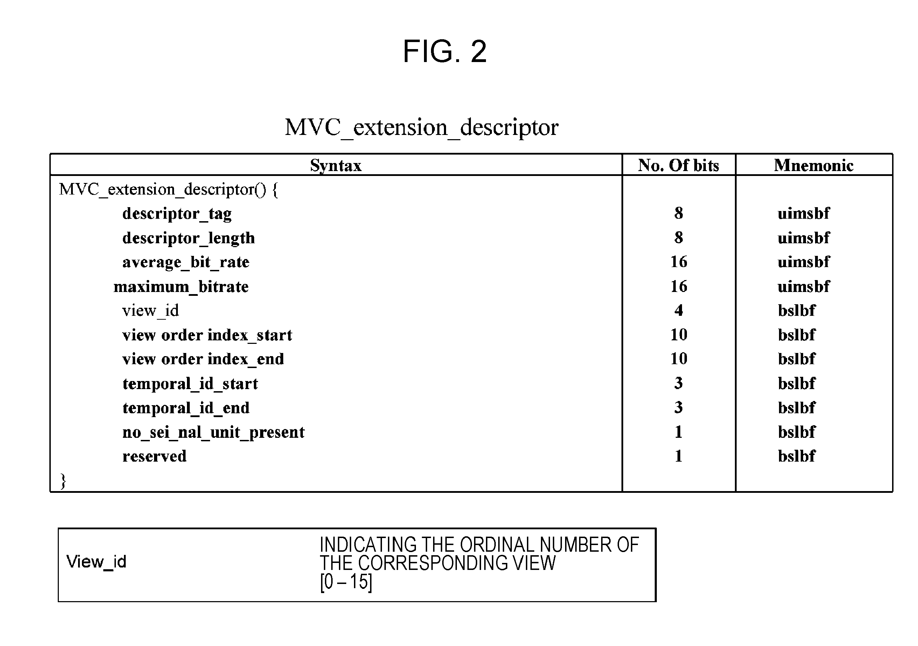

Fig. 2 illustrates an example of the structure (Syntax) of this MVC extension descriptor, though a detailed description of the entire descriptor will be omitted. The field "view order index_start" indicates the first view number, and "view order index_end" indicates the final view number. By these items of information, the number of all views can be identified. The field "view_id" indicates the ordinal number of the view (non-baseview) corresponding to this descriptor. This field "view_id" specifies the content similar to that of "view_id" in "NAL unit header", which will be described later, and may be omitted as a reserved bit.

The receiver 200 receives a transport stream TS transmitted from the broadcasting station 100 through broadcast waves. In this transport stream TS, when two-dimensional (2D) images are transmitted, an AVC (2D) video elementary stream including two-dimensional data is contained. Moreover, in this transport stream TS, when three-dimensional (3D) images are transmitted, an MVC base video stream only or a predetermined number of extended video streams together with this MVC base video stream are contained.

On the basis of the presence and the insertion position of specific information in a layer of the transport stream TS, the receiver 200 processes a video stream contained in this transport stream TS. That is, the configuration of a buffer memory when decoding is performed and a decoding mode and a display mode are determined. The receiver 200 obtains image data for performing two-dimensional (2D) image display or items of image data of a predetermined number of views for performing three-dimensional (3D) image display, and then displays two-dimensional (2D) images or (3D) images.

In this embodiment, the receiver 200 determines whether an MVC extension descriptor is present in a descriptor portion of a video elementary loop (first ES loop) corresponding to the base video stream under a program map table. Then, when a descriptor is present in the first ES loop, the receiver 200 identifies that three-dimensional (3D) transmission is being performed and that this video stream includes image data of a base view for performing three-dimensional image display and image data of a predetermined number of views other than the base view. In this case, the receiver 200 decodes the corresponding video stream contained in the transport stream TS so as to obtain a plurality of items of image data for performing three-dimensional image display, and then displays three-dimensional images.

On the other hand, when a descriptor is not present in the first ES loop, the receiver 200 determines whether an extended video stream is contained in the transport stream TS. Then, when an extended video stream is contained, the receiver 200 determines whether an MVC extension descriptor is present in a descriptor portion of a video elementary loop (second ES loop) corresponding to the extended video stream under the program map table.

Then, when a descriptor is present in the second ES loop, the receiver 200 identifies that three-dimensional (3D) transmission is being performed and that this extended video stream and the base video stream include image data of a base view for performing three-dimensional image display and image data of a predetermined number of views other than the base view. In this case, the receiver 200 decodes a plurality of video streams contained in the transport stream TS so as to obtain a plurality of items of image data for performing three-dimensional image display, and then displays three-dimensional images.

Further, when there is no extended video stream contained in the transport stream TS or when a descriptor is not present in the second ES loop, the receiver 200 identifies that two-dimensional (2D) transmission is being performed. In this case, the receiver 200 decodes the video stream contained in the transport stream TS so as to obtain two-dimensional image data, and then performs known, basic two-dimensional image display.

### "Example of Configuration of Transmission Data Generator"

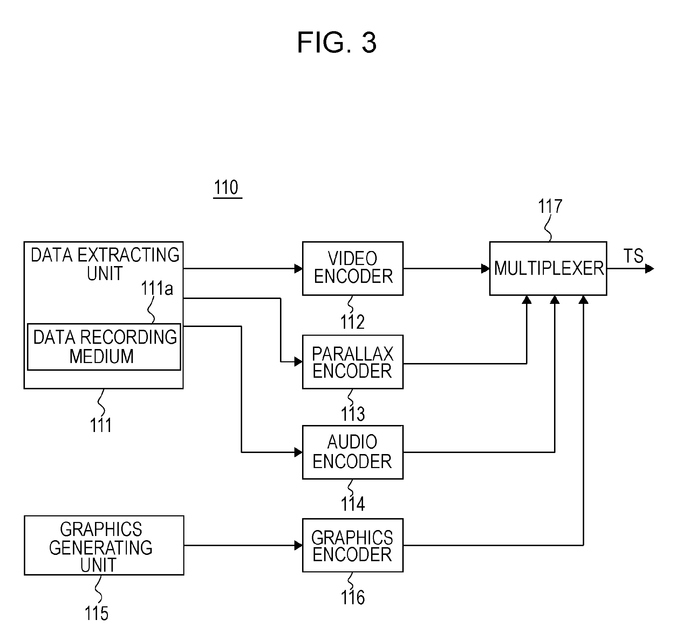

Fig. 3 illustrates an example of the configuration of a transmission data generator 110, which generates the above-described transport stream, in the broadcasting station 100. This transmission data generator 110 includes a data extracting unit (archive unit) 111, a video encoder 112, a parallax encoder 113, and an audio encoder 114. This transmission data generator 110 also includes a graphics generating unit 115, a graphics encoder 116, and a multiplexer 117.

A data recording medium 111a is fixed to the data extracting unit 111 such that, for example, it is attachable to and detachable from the data extracting unit 111. In this data recording medium 111a, together with image data of a program to be transmitted, sound data associated with this image data is recorded. For example, in accordance with a program, image data is switched to image data for performing three-dimensional (3D) image display or to image data for performing two-dimensional (2D) image display. Moreover, for example, in accordance with the content of a program, such as the program itself of commercials, image data is switched to image data for performing three-dimensional image display or to image data for performing two-dimensional image display. A plurality of items of image data for performing three-dimensional image display is constituted by image data of a base view and image data of a predetermined number of non-baseviews, as stated above.

When image data is image data for performing three-dimensional image display, parallax information may also be recorded on the data recording medium 111a. This parallax information is parallax information (parallax vectors) indicating parallax between a base view and each non-baseview, depth data, or the like. The depth data is possible to handle as parallax information by performing predetermined conversion. The parallax information is, for example, parallax information concerning each pixel (picture element) or parallax information concerning each of divided areas obtained by dividing a view (image) by a predetermined number.

This parallax information is used for, for example, providing parallax by adjusting the position of the same superpose information (such as graphics information) to be superposed on an image of a base view and an image of each non-baseview in a reception side. This parallax information is also used for, for example, obtaining display image data of a predetermined number of views by performing interpolation processing (post processing) on image data of a base view and image data of each non-baseview in a reception side. The data recording medium 111a is a disk-shaped recording medium, a semiconductor memory, or the like. The data extracting unit 111 extracts image data, sound data, parallax information, and so on, from the data recording medium 111a and outputs them.

The video encoder 112 performs coding, for example, MPEG2video, MPEG4-AVC (MVC), HEVC, or the like, on image data output from the data extracting unit 111, thereby obtaining coded video data. Moreover, this video encoder 112 generates a video elementary stream by using a stream formatter (not shown) which is disposed at the subsequent stage.

That is, when image data is two-dimensional (2D) image data, this video encoder 112 generates an AVC (2D) video elementary stream including this two-dimensional image data. On the other hand, when image data is image data of a plurality of views for performing three-dimensional (3D) image display, this video encoder 112 generates one or a plurality of video elementary streams including image data of these plural views. For example, if substreams are configured such that they are constituted by a single video stream, the video encoder 112 codes image data of a base view and image data of a predetermined number of non-baseviews as one picture, thereby generating an MVC video elementary stream (base video stream).

On the other hand, for example, if substreams are configured such that they are constituted by a plurality of streams, the video encoder 112 codes image data of a base view as one video elementary stream, thereby generating an MVC base-view video elementary stream (base video stream). Additionally, in this case, the video encoder 112 also codes items of image data of a predetermined number of non-baseviews as independent video elementary streams, thereby generating a predetermined number of MVC non-baseview video elementary streams (extended video streams).

The audio encoder 114 performs coding, such as MPEG2 Audio AAC or the like, on sound data output from the data extracting unit 111, thereby generating an audio elementary stream.

The parallax encoder 113 performs predetermined coding on parallax information output from the data extracting unit 111, thereby generating an elementary stream of parallax information. Note that, as stated above, if the parallax information is parallax information concerning each pixel (picture element), it is possible to handle this parallax information as pixel data. In this case, the parallax encoder 113 may code the parallax information by using a coding method similar to that used for the above-described image data, thereby generating a parallax information elementary stream. Note that, in this case, coding of parallax information output from the data extracting unit 111 may be performed by the video encoder 112, in which case, the parallax information encoder 113 is not necessary.

The graphics generating unit 115 generates data (graphics data) indicating graphics information (also including subtitle information) to be superposed on an image. The graphics encoder 116 generates a graphics elementary stream including graphics data generated by the graphics generating unit 115.

The graphics information indicates, for example, logos. The subtitle information indicates, for examples, subtitles. This graphics data is bitmap data. Offset information indicating superpose positions on an image is added to this graphics data. This offset information indicates, for example, offset values in the vertical direction and in the horizontal direction of distances from the point of origin at the top left of an image to a pixel at the top left of graphics information at a superpose position. Note that the standards for transmitting subtitle data as bitmap data are standardized as "DVB_Subtitling" by DVB, which is the European digital broadcasting standards, and are utilized.

The multiplexer 117 packetizes and multiplexes elementary streams generated by the video encoder 112, the parallax encoder 113, the audio encoder 114, and the graphics encoder 116, thereby generating a transport stream TS. When transmitting two-dimensional (2D) images, this transport stream TS contains an AVC (2D) video elementary stream including two-dimensional image data. On the other hand, when transmitting three-dimensional (3D) images, this transport stream TS contains an MVC base substream and a predetermined number of extended substreams together with this MVC base substream.

The multiplexer 117 inserts specific information into a specific position of a layer of the transport stream TS when transmitting three-dimensional (3D) images. In this case, the specific position is changed depending on whether substreams are configured such that they are constituted by a single stream or a plurality of streams.

If substreams are configured such that they are constituted by a single video stream, at a position in a layer of the transport stream TS at which information related to the above-described base video stream is located, specific information, for example, a descriptor having information concerning image data of individual views, is inserted. In this embodiment, the multiplexer 117 inserts an MVC extension descriptor (see Fig. 2) into a descriptor portion of a video elementary loop corresponding to the base video stream under the program map table.

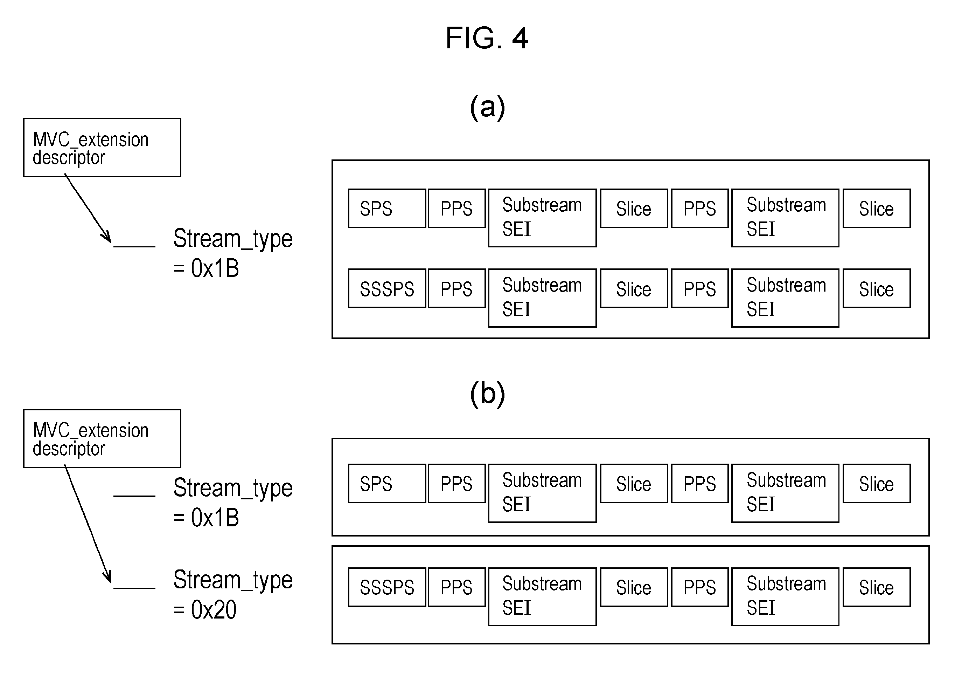

Fig. 4(a) schematically illustrates that an MVC extension descriptor (MVC_extension_descriptor) is inserted in this manner in association with a base video stream. In this example, a base video stream having a stream type (Stream type) "0x1B" includes coded data of base-view image data and coded data of one item of non-baseview image data. The coded data of the base-view image data is constituted by "SPS - Coded Slice", and the coded data of the non-baseview image data is constituted by "Subset SPS - Coded Slice".

Moreover, if substreams are configured such that they are constituted by a plurality of streams, at a position in a layer of the transport stream TS at which an item of information related to each of the above-described predetermined number of extended video streams is located, specific information, for example, a descriptor having an item of information concerning image data of each view, is inserted. In this embodiment, an MVC extension descriptor (see Fig. 2) is inserted into a descriptor portion of a video elementary loop corresponding to an extended video stream under a program map table.

Fig. 4(b) schematically illustrates that an MVC extension descriptor (MVC_extension_descriptor) is inserted in this manner in association with an extended video stream. In this example, a base video stream having a stream type (Stream type) "0x1B" includes coded data of base-view image data only. The coded data of this base-view image data is constituted by "SPS - Coded Slice". Additionally, in this example, an extended video stream having a stream type (Stream type) "0x20" includes coded data of non-baseview image data only. The coded data of this non-baseview image data is constituted by "Subset SPS - Coded Slice".

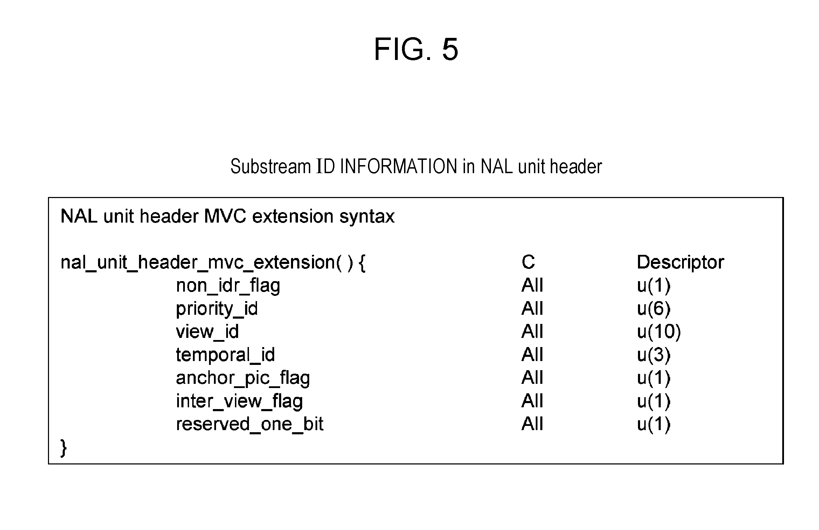

Fig. 5 illustrates an example of the configuration (Syntax) of an NAL unit header (NAL unit header MVC extension). The field "view_id" indicates the ordinal number of the corresponding view. That is, when decoding is performed, a reception side is able to identify, on the basis of field information concerning this field "view_id", to which item of view image data in a packet each item of coded data corresponds.

An operation of the transmission data generator 111 shown in Fig. 3 will be described briefly. Image data (one item of image data for performing two-dimensional image display or image data of a plurality of views for performing three-dimensional image display) output from the data extracting unit 111 is supplied to the video encoder 112. In this video encoder 112, encoding processing, for example, MPEG2video, MPEG4-AVC (MVC), HEVC, or the like, is performed on this image data, and a video elementary stream including coded video data is generated and is then output to the multiplexer 117.

That is, in the video encoder 112, in the case of image data for performing two-dimensional image display, an AVC (2D) video elementary stream including this image data, for example, is generated. On the other hand, in the case of image data of a plurality of views for performing three-dimensional image display, one or a plurality of video elementary streams including the image data of these plural views are generated.

For example, when substreams are configured such that they are constituted by a single video stream, an MVC video elementary stream (base video stream) including image data of a base view and image data of a predetermined number of non-baseviews is generated. Moreover, for example, when substreams are configured such that they are constituted by a plurality of streams, an MVC base-view video elementary stream (base video stream) including image data of a base view is generated. Moreover, in this case, an MVC non-baseview video elementary stream (extended video stream) including each of items of image data of a predetermined number of non-baseviews is also generated.

Moreover, when items of image data of a plurality of views for performing three-dimensional image display are output from the data extracting unit 111, parallax information corresponding to each of the items of image data of the individual views is also output from this data extracting unit 111. This parallax information is supplied to the parallax encoder 113. In the parallax encoder 113, predetermined encoding processing is performed on the parallax information, thereby generating a parallax elementary stream including the coded data. This parallax elementary stream is supplied to the multiplexer 117.

Moreover, when image data is output from the data extracting unit 111, sound data associated with this image data is also output from this data extracting unit 111. This sound data is supplied to the audio encoder 114. In this audio encoder 114, encoding processing, such as MPEG2Audio AAC or the like, is performed on the sound data, thereby generating an audio elementary stream including coded audio data. This audio elementary stream is supplied to the multiplexer 117.

In accordance with image data output from the data extracting unit 111, in the graphics generating unit 115, data (graphics data) of graphics information (including subtitle information) to be superposed on an image (view) is generated. This graphics data is supplied to the graphics encoder 116. In the graphics encoder 116, predetermined encoding processing is performed on this graphics data, thereby generating a graphics elementary stream including coded data. This graphics elementary stream is supplied to the multiplexer 117.

In the multiplexer 117, elementary streams supplied from the individual encoders are packetized and multiplexed, thereby generating a transport stream TS. When two-dimensional (2D) images are transmitted, an AVC (2D) video elementary stream including two-dimensional image data is contained in this transport stream TS. On the other hand, when three-dimensional (3D) images are transmitted, an MVC base substream and a predetermined number of extended substreams together with this MVC base substream are contained in this transport stream TS.

Further, in the multiplexer 117, when three-dimensional (3D) images are transmitted and if substreams are configured such that they are constituted by a single video stream, an MVC extension descriptor (see Fig. 2) is inserted into a descriptor portion of a video elementary loop corresponding to the base video stream under a program map table. On the other hand, in the multiplexer 117, when three-dimensional (3D) images are transmitted and if substreams are configured such that they are constituted by a plurality of streams, an MVC extension descriptor (see Fig. 2) is inserted into a descriptor portion of a video elementary loop corresponding to an extended video stream under a program map table.

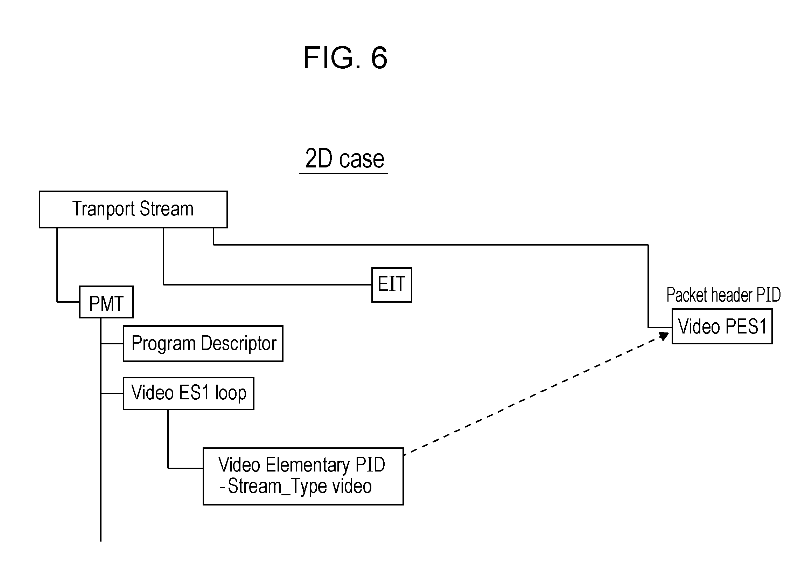

Fig. 6 illustrates an example of the configuration of a transport stream TS when two-dimensional (2D) images are transmitted. In this example of the configuration, in the transport stream TS, a PES packet "Video PES1" of a video elementary stream including image data for performing two-dimensional (2D) image display is contained. Note that, in this example of the configuration, other PES packets are not shown for a simple representation of the drawing.

Moreover, in the transport stream TS, PMT (Program Map Table) is contained as PSI (Program Specific Information). This PSI is information indicating to which program each elementary stream contained in the transport stream TS belongs. Additionally, in the transport stream TS, EIT (Event Information Table) for performing the management of events is contained as SI (Serviced Information).

In PMT, a program descriptor (Program Descriptor) for describing information related to the entire program is present. Also, in this PMT, an elementary loop having information related to each elementary stream is present. In this example of the configuration, a video elementary loop corresponding to a PES packet "Video PES1" is present. In this video elementary loop, information, such as a packet identifier (PID) and stream type (Stream_Type) of a video elementary stream, is disposed, and a descriptor for describing information related to this video elementary stream is also disposed, although it is not shown.

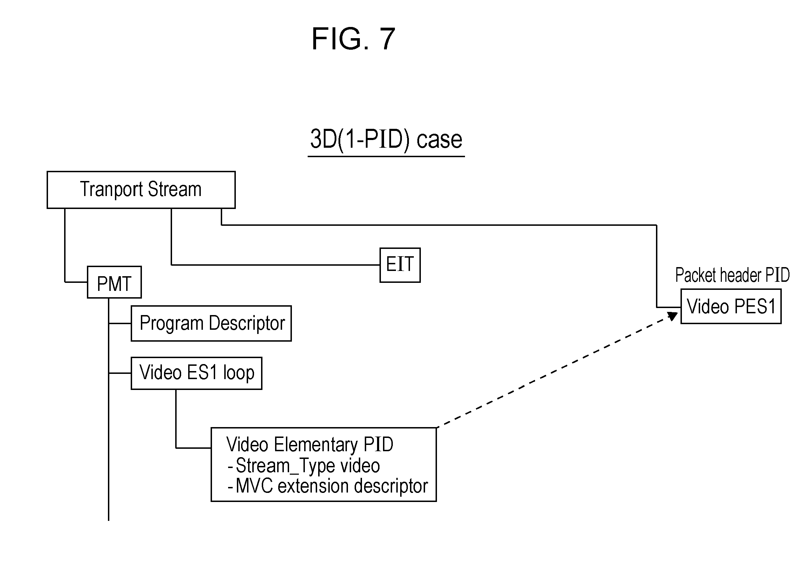

Fig. 7 illustrates an example of the configuration of a transport stream TS when three-dimensional (3D) images are transmitted. This example of the configuration shows a case in which substreams are configured such that they are constituted by a single video stream (1-PID case). In this example of the configuration, in the transport stream TS, a PES packet "Video PES1" of an MVC video elementary stream (base video stream) including image data of a base view and image data of a predetermined number of non-baseviews is contained. Note that, in this example of the configuration, other PES packets are not shown for a simple representation of the drawing.

In PMT, a video elementary loop corresponding to the PES packet "Video PES1" is present. In this video elementary loop, information, such as a packet identifier (PID) and stream type (Stream_Type) of a video elementary stream, is disposed. Then, as one of descriptors for describing information related to this video elementary stream, an MVC extension descriptor (MVC_extension_descriptor), such as that shown in Fig. 2, is inserted into this video elementary loop.

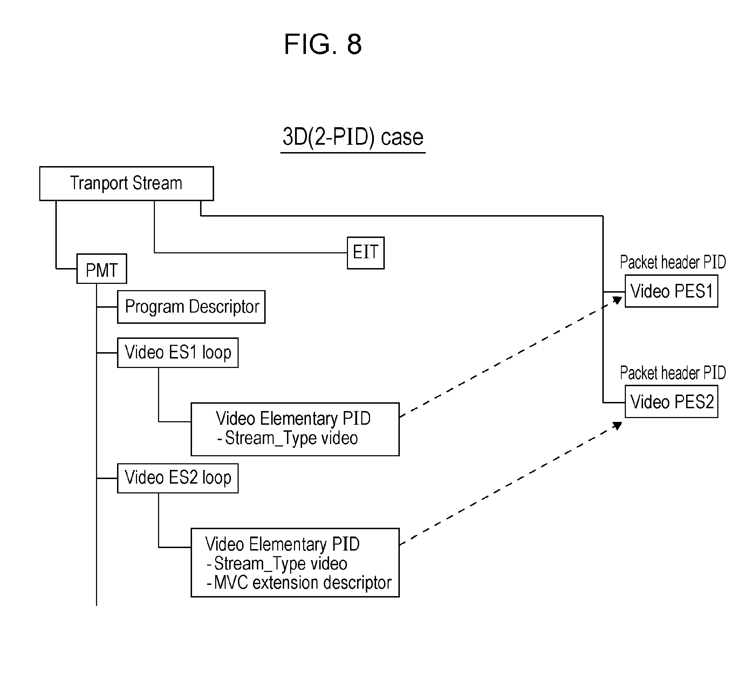

Fig. 8 illustrates an example of the configuration of a transport stream TS when three-dimensional (3D) images are transmitted. This example of the configuration shows a case in which substreams are configured such that they are constituted by a plurality of streams, here, a case in which they are constituted by two streams (2-PID case). In this example of the configuration, in the transport stream TS, a PES packet "Video PES1" of an MVC video elementary stream (base substream) including image data of a base view is contained. Also, in this example of the configuration, in the transport stream TS, a PES packet "Video PES2" of an MVC video elementary stream (extended substream) including image data of a non-baseview is contained. Note that, in this example of the configuration, other PES packets are not shown for a simple representation of the drawing.

In PMT, a video elementary loop corresponding to the PES packet "Video PES1" is present. In this video elementary loop, information, such as a packet identifier (PID) and stream type (Stream_Type) of a video elementary stream, is disposed, and a descriptor for describing information related to this video elementary stream is also disposed, although it is not shown.

In PMT, a video elementary loop corresponding to the PES packet "Video PES2" is also present. In this video elementary loop, information, such as a packet identifier (PID) and stream type (Stream_Type) of a video elementary stream, is disposed. Then, as one of descriptors for describing information related to this video elementary stream, an MVC extension descriptor (MVC_extension_descriptor), such as that shown in Fig. 2, is inserted into this video elementary loop.

### "Example of Configuration of Receiver"

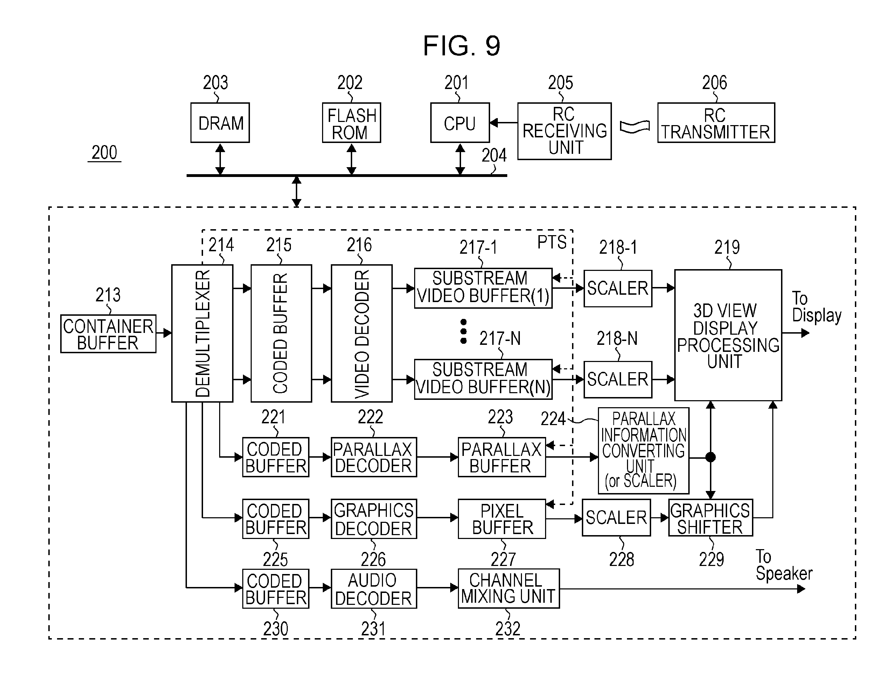

Fig. 9 illustrates an example of the configuration of the receiver 200. This receiver 200 includes a CPU 201, a flash ROM 202, a DRAM 203, an internal bus 204, a remote controller receiving unit 205, and a remote controller transmitter 206. This receiver 200 also includes a container buffer 213, a demultiplexer 214, a coded buffer 215, a video decoder 216, substream video buffers 217-1, ..., 217-N, scalers 218-1, ..., 218-N, and a 3D view display processing unit 219.

The receiver 200 also includes a coded buffer 221, a parallax decoder 222, a parallax buffer 223, and a parallax information converting unit 224. The receiver 200 also includes a coded buffer 225, a graphics decoder 226, a pixel buffer 227, a scaler 228, and a graphics shifter 229. The receiver 200 also includes a coded buffer 230, an audio decoder 231, and a channel mixing unit 232.

The CPU 201 controls operations of the individual elements of the receiver 200. The flash ROM 202 stores control software and retains data therein. The DRAM 203 forms a work area of the CPU 201. The CPU 201 loads software and data read from the flash ROM 202 into the DRAM 203 and starts the software, thereby controlling the individual elements of the receiver 200. The remote control receiving unit 205 receives a remote control signal (remote control code) sent from the remote control transmitter 206 and supplies the remote control signal to the CPU 201. The CPU 201 controls the individual elements of the receiver 200 on the basis of this remote control code. The CPU 201, the flash ROM 202, and the DRAM 203 are connected to the internal bus 204.

The container buffer 213 temporarily stores a transport stream TS received by a digital tuner or the like. When two-dimensional (2D) images are transmitted, this transport stream TS contains, for example, an AVC (2D) video elementary stream. In this stream, image data for performing two-dimensional image display is contained.

When three-dimensional (3D) images are transmitted, this transport stream TS contains, for example, an MVC base substream and a predetermined number of extended substreams together with this MVC base substream. If substreams are configured such that they are constituted by a single video stream, image data of a base view and image data of a predetermined number of non-baseviews are contained in the single MVC video stream. On the other hand, when substreams are configured such that they are constituted by a plurality of streams, image data of a base view is contained in this MVC base substream and image data of a non-baseview is contained in each of the predetermined number of extended substreams.

Moreover, when three-dimensional (3D) images are transmitted, specific information is inserted at a position in a layer of this transport stream TS at which information related to the base video stream or an extended video stream is located. In this embodiment, when substreams are configured such that they are constituted by a single video stream, an MVC extension descriptor is inserted into a descriptor portion of a video elementary loop corresponding to the base video stream under PMT. When substreams are configured such that they are constituted by a plurality of streams, an MVC extension descriptor is inserted into a descriptor portion of a video elementary loop corresponding to an extended video stream under PMT.

The demultiplexer 214 extracts video, parallax, and audio streams from a transport stream TS temporarily stored in the container buffer 213. When three-dimensional (3D) images are transmitted, the demultiplexer 214 also extracts the above-described MVC extension descriptor from this transport stream TS, and sends the MVC extension descriptor to the CPU 201.

The CPU 201 is able to determine, depending on the presence or the absence of this MVC extension descriptor, whether three-dimensional (3D) image transmission or two-dimensional (2D) image transmission is performed. Additionally, when the MVC extension descriptor is inserted into a video elementary loop corresponding to the MVC base video stream, the CPU 201 is able to determine that substreams are configured such that they are constituted by a single video stream. On the other hand, when the MVC extension descriptor is inserted into a video elementary loop corresponding to an MVC extended video stream, the CPU 201 is able to determine that substreams are configured such that they are constituted by a plurality of streams.

The CPU 201 performs control, on the basis of the presence and the insertion position of the above-described MVC extension descriptor, so that the management of the coded buffer 215, the operation of the video decoder 216, etc. may match the received image data.

The coded buffer 215 temporarily stores one or a plurality of video streams extracted by the demultiplexer 214. In the coded buffer 215, the system of management configuration of the buffer differs depending on whether two-dimensional (2D) image transmission or three-dimensional (3D) image transmission is performed. Moreover, in the coded buffer 215, even when three-dimensional (3D) image transmission is performed, the system of management configuration of the buffer differs depending on whether substreams are configured such that they are constituted by a single stream or a plurality of streams.

That is, when coded data (substream) is supplied from the demultiplexer 214 as one elementary stream having the single PID value, write/read address management is performed only once altogether. In contrast, when coded data (substream) is supplied from the demultiplexer 214 as a plurality of elementary streams having different PID values, write/read address management is performed independently for each of items of coded data having respective PIDs.

The video decoder 216 performs decode processing on a video elementary stream stored in the coded buffer 215, thereby obtaining image data. In this case, when two-dimensional (2D) images are transmitted, decode processing is performed by one decoder on an AVC (2D) video elementary stream, thereby obtaining image data for performing two-dimensional (2D) image display.

In contrast, when three-dimensional (3D) images are transmitted and if substreams are configured such that they are constituted by a single video stream, decode processing is performed as follows. That is, for one MVC video stream including coded data of items of image data of a plurality of views, the decoder 216 switches a packet to be processed supplied from the buffer 215 to the decoder 216 on the basis of "view_id" of "NAL unit header", and then performs decode processing on each item of image data. As a result of this, items of image data of a plurality of views for performing three-dimensional (3D) image display are obtained.

On the other hand, when substreams are configured such that they are constituted by a plurality of streams, decode processing is performed as follows. That is, the video decoder 216 switches data to be stored in the buffer 215 on the basis of "view_id" of "NAL unit header" of an NAL packet received from the demultiplexer 214. Thereafter, reading of compressed data from the buffer 215 and processing by the decoder 216 are performed similarly to decoding of a single view (view). On an MVC base substream including coded data of image data of a base view and a predetermined number of MVC extended substreams including coded data of image data of non-baseviews, decode processing is performed by using associated decoders. As a result of this, items of image data of a plurality of views for performing three-dimensional (3D) image display are obtained.

The substream video buffers 217-1, ..., 217-N each temporarily store image data for performing two-dimensional (2D) image display or items of image data of a plurality of views for performing three-dimensional (3D) image display obtained by the video decoder 216. Here, in the case of 3D, the minimum value of N is 2. The scalers 218-1, ..., 218-N each adjust levels of the output resolution of the items of image data of the individual views output from the substream video buffers 217-1, ..., 217-N to predetermined levels of resolution.

The coded buffer 221 temporarily stores a parallax stream extracted by the demultiplexer 214. The parallax decoder 222 performs processing reverse to that performed by the parallax encoder 113 (see Fig. 3) of the above-described transmission data generator 110. That is, the parallax decoder 222 performs decode processing on a parallax stream stored in the coded buffer 221, thereby obtaining parallax information corresponding to each of items of image data of individual views. The parallax buffer 223 temporarily stores parallax information obtained by the parallax decoder 222.

The parallax information converting unit 224 generates, on the basis of parallax information stored in the parallax buffer 223, parallax information concerning each pixel matches the size of scaled image data. For example, if sent parallax information is information concerning each block, it is converted into parallax information concerning each pixel. Alternatively, for example, if sent parallax information is information concerning each pixel but does not match the size of scaled image data, it is scaled in an appropriate manner. Or, when superposition of graphics or the like is performed in a receiver, parallax information concerning a block at a superpose position is utilized.

The coded buffer 225 temporarily stores a graphics stream extracted by the demultiplexer 214. The graphics decoder 226 performs processing reverse to that performed by the graphics encoder 116 (see Fig. 3) of the above-described transmission data generator 110. That is, the graphics decoder 226 performs decode processing on a graphics stream stored in the coded buffer 225, thereby obtaining graphics data (including subtitle data). The graphics decoder 226 also generates graphics bitmap data to be superposed on a view (image) on the basis of this graphics data.

The pixel buffer 227 temporarily stores graphics bitmap data generated by the graphics decoder 226. The scaler 228 adjusts the size of bitmap data graphics stored in the pixel buffer 227 to the size of scaled image data.

The graphics shifter 229 performs shift processing on graphics bitmap data subjected to the size adjustment, on the basis of parallax information obtained by the parallax information converting unit 224. Then, the graphics shifter 229 generates graphics bitmap data to be superposed on each of items of image data of individual views output from the 3D view display processing unit 219.

When two-dimensional (2D) images are transmitted and if two-dimensional (2D) image display is performed, the 3D view display processing unit 219 superposes graphics bitmap data output from the graphics shifter 229 on scaled image data for performing two-dimensional (2D) image display input through, for example, the scaler 218-1, and outputs the image data to a display.

On the other hand, when three-dimensional (3D) images are transmitted and if stereoscopic three-dimensional image display is performed, the 3D view display processing unit 219 superposes graphics bitmap data subjected to shift processing output from the graphics shifter 229 on each of scaled left-eye image data and scaled right-eye image data input through, for example, the scalers 218-1 and 218-2, respectively, and outputs the image data to a display.

On the other hand, when three-dimensional (3D) images are transmitted and if multi-view three-dimensional image display is performed, on the basis of inter-view parallax data obtained by the parallax data converting unit 224, from among the items of scaled image data of the individual views input through, for example, the scalers 218-1 through 218-N, respectively, the 3D view display processing unit 219 performs inter-view interpolation and synthesis of items of image data of a predetermined number of views, and outputs the image data to a display. Then, in this case, the 3D view display processing unit 219 further superposes the graphics bitmap data subjected to shift processing output from the graphics shifter 229 on each of the interpolated and synthesized items of image data of the individual views, and outputs the image data to a display.

The coded buffer 230 temporarily stores an audio stream extracted by the demultiplexer 214. The audio decoder 231 performs processing reverse to that performed by the audio encoder 114 (see Fig. 3) of the above-described transmission data generator 110. That is, the audio decoder 231 performs decode processing on an audio stream stored in the coded buffer 230, thereby obtaining sound data. The channel mixing unit 232 generates, for sound data obtained by the audio decoder 231, sound data of each channel for implementing, for example, 5.1 channel surround, and outputs the sound data.

An operation of the receiver 200 shown in Fig. 9 will be described briefly. A transport stream TS received by a digital tuner or the like is temporarily stored in the container buffer 213. When two-dimensional (2D) images are transmitted, in this transport stream TS, an AVC (2D) video elementary stream, for example, is contained. On the other hand, when three-dimensional (3D) images are transmitted, in this transport stream TS, an MVC base video stream only or a predetermined number of extended video streams together with this MVC base video stream, for example, are contained.

In the demultiplexer 214, video, parallax, and audio streams are extracted from the transport stream TS temporarily stored in the container buffer 213. Moreover, in the demultiplexer 214, when three-dimensional (3D) images are transmitted, an MVC extension descriptor is extracted from this transport stream TS and is sent to the CPU 201.

In the CPU 201, on the basis of the presence and the insertion position of this MVC extension descriptor, the management of the coded buffer 215, the operation of the video decoder 216, etc. are controlled so that they may match two-dimensional (2D) image transmission or three-dimensional (3D) image transmission.

One or a plurality of video elementary streams extracted by the demultiplexer 214 are supplied to the coded buffer 215 and are temporarily stored therein. In the video decoder 216, decode processing is performed on a video elementary stream stored in the coded buffer 215, thereby obtaining image data.

In this case, in the video decoder 216, when two-dimensional (2D) images are transmitted, decode processing is performed on an AVC (2D) video elementary stream by using one decoder, thereby obtaining image data for performing two-dimensional (2D) image display.

Also, in this case, when three-dimensional (3D) images are transmitted and if substreams are configured such that they are constituted by a single video stream, items of image data of a plurality of views for performing three-dimensional (3D) image display are obtained by performing decode processing as follows. That is, for an MVC base video stream including coded data of items of image data of a plurality of views, the decoder 216 switches a packet to be processed supplied from the buffer 215 to the decoder 216 on the basis of "view_id" of "NAL unit header", and then performs decode processing on each item of image data.

Also, in this case, when three-dimensional (3D) images are transmitted and if substreams are configured such that they are constituted by a plurality of streams, items of image data of a plurality of views for performing three-dimensional (3D) image display are obtained by performing decode processing as follows. That is, data to be stored in the buffer 215 is switched on the basis of "view_id" of "NAL unit header" of an NAL packet received from the demultiplexer 214. Thereafter, reading of compressed data from the buffer 215 and processing by the decoder 216 are performed similarly to that of decoding of a single view (view). On an MVC base substream including coded data of image data of a base view and a predetermined number of MVC extended substreams including coded data of image data of non-baseviews, decode processing is performed by using associated decoders.

Image data for performing two-dimensional (2D) image display or items of image data of a plurality of views for performing three-dimensional (3D) image display obtained by the video decoder 216 are supplied to the substream video buffers 217-1, ..., 217-N and are temporarily stored therein. Then, the image data is adjusted to have predetermined levels of resolution by the scalers 218-1, ..., 218-N and is supplied to the 3D view display processing unit 219.

Further, a parallax data stream extracted by the demultiplexer 214 is supplied to the coded buffer 221 and is temporarily stored therein. In the parallax decoder 222, decode processing on a parallax data stream is performed, thereby obtaining parallax information corresponding to image data of each view. This parallax information is supplied to the parallax buffer 223 and is temporarily stored therein.

In the parallax information converting unit 224, on the basis of parallax information stored in the parallax buffer 223, parallax information concerning each pixel which matches the size of scaled image data is generated. In this case, if parallax information obtained by the parallax decoder 222 is information concerning each block, it is converted into parallax information concerning each pixel. Or, when superposition of graphics or the like is performed in a receiver, parallax information concerning a block at a superpose position is utilized. Alternatively, in this case, if parallax information obtained by the parallax decoder 222 is information concerning each pixel but does not match the size of scaled image data, it is scaled in an appropriate manner. This parallax information is supplied to the 3D view display processing unit 219 and the graphics shifter 229.

Moreover, a graphics stream extracted by the demultiplexer 214 is supplied to the coded buffer 225 and is temporarily stored therein. In the graphics decoder 226, decode processing is performed on a graphics stream stored in the coded buffer 225, thereby obtaining graphics data (including subtitle data). In the graphics decoder 226, graphics bitmap data to be superposed on a view (image) is also generated on the basis of this graphics data.

This graphics bitmap data is supplied to the pixel buffer 227 and is temporarily stored therein. In the scaler 228, the size of the graphics bitmap data stored in the pixel buffer 227 is adjusted to the size of scaled image data.

In the graphics shifter 229, shift processing is performed on the graphics bitmap data subjected to the size adjustment, on the basis of parallax information obtained by the parallax information converting unit 224. Then, in this graphics shifter 229, graphics bitmap data to be superposed on each of items of image data of individual views output from the 3D view display processing unit 219 is generated. This bitmap data is supplied to the 3D view display processing unit 219.

In the 3D view display unit 219, when two-dimensional (2D) images are transmitted and if two-dimensional (2D) image display is performed, the following processing is performed. That is, the graphics bitmap data output from the graphics shifter 229 is superposed on scaled image data for performing two-dimensional (2D) image display input through, for example, the scaler 218-1, and the image data is output to a display.

On the other hand, in the 3D view display processing unit 219, when three-dimensional (3D) images are transmitted and if stereoscopic three-dimensional image display is performed, the following processing is performed. That is, graphics bitmap data subjected to shift processing output from the graphics shifter 229 is superposed on each of scaled left-eye image data and scaled right-eye image data input through, for example, the scalers 218-1 and 218-2, respectively, and the image data is output to a display.

On the other hand, in the 3D view display processing unit 219, when three-dimensional (3D) images are transmitted and if multi-view three-dimensional image display is performed, the following processing is performed. That is, on the basis of inter-view parallax data obtained by the parallax information converting unit 224, from among the items of scaled view image data input through, for example, the scalers 218-1 through 218-N, respectively, inter-view interpolation and synthesis of items of image data of a predetermined number of views is performed, and the image data is output to a display. Then, in this case, the graphics bitmap data subjected to shift processing output from the graphics shifter 229 is superposed on each of the interpolated and synthesized items of image data of the individual views, and the image data is output to a display.

Moreover, an audio stream extracted by the demultiplexer 214 is supplied to the coded buffer 230 and is temporarily stored therein. In the audio decoder 231, decode processing is performed on an audio stream stored in the coded buffer 230, thereby obtaining decoded sound data. This sound data is supplied to the channel mixing unit 232. In the channel mixing unit 232, for the sound data, sound data of each channel for implementing, for example, 5.1 channel surround, is generated. This sound data is supplied to, for example, a speaker, and sound is output in accordance with image display.

As stated above, in the CPU 201, on the basis of the presence and the insertion position of an MVC extension descriptor, control is performed so that the management of the coded buffer 215 and also the operation of the video decoder 216, etc. may match two-dimensional (2D) image transmission or three-dimensional (3D) image transmission.

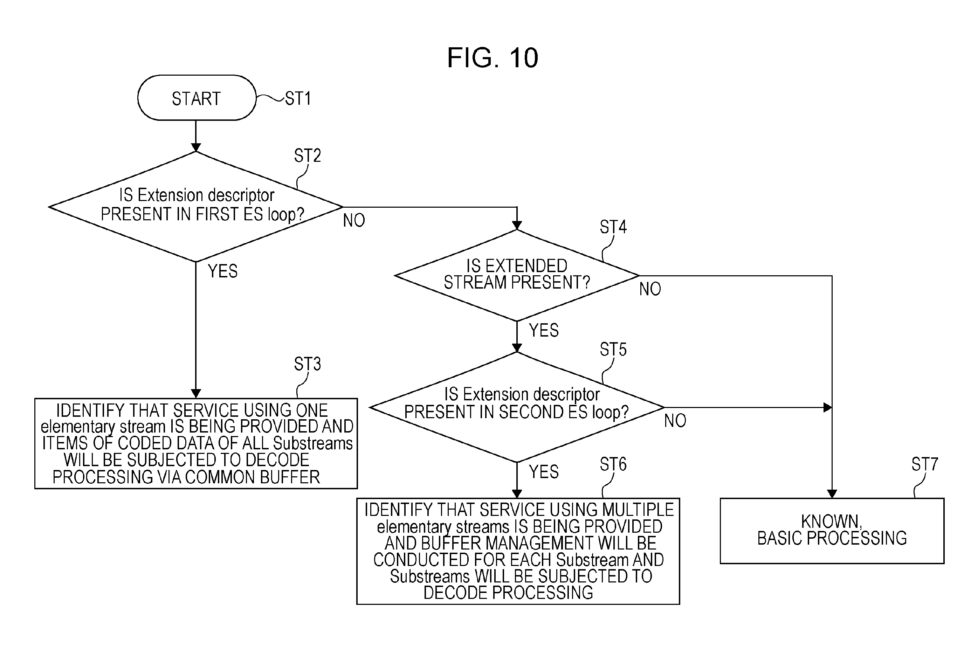

The flowchart of Fig. 10 illustrates an example of control processing executed by the CPU 201. The CPU 201 executes the control processing indicated by this flowchart at a timing at which services, such as channel switching, are changed.

The CPU 201 starts processing in step ST1, and proceeds to processing of step ST2. In step ST2, the CPU 201 determines whether or not an MVC extension descriptor is present in a descriptor portion of a video elementary loop (first ES loop) corresponding to a base video stream (Stream_type=0x1B) under PMT.

If an MVC extension descriptor is present in the first ES loop, in step ST3, the CPU 201 identifies that three-dimensional (3D) image transmission is being performed and that substreams are configured such that they are constituted by a single video stream. That is, the CPU 201 identifies that a service using one elementary stream (elementary stream) is being provided. Then, the CPU 201 performs control so that items of coded data of all substreams will be subjected to decode processing via the common buffer.

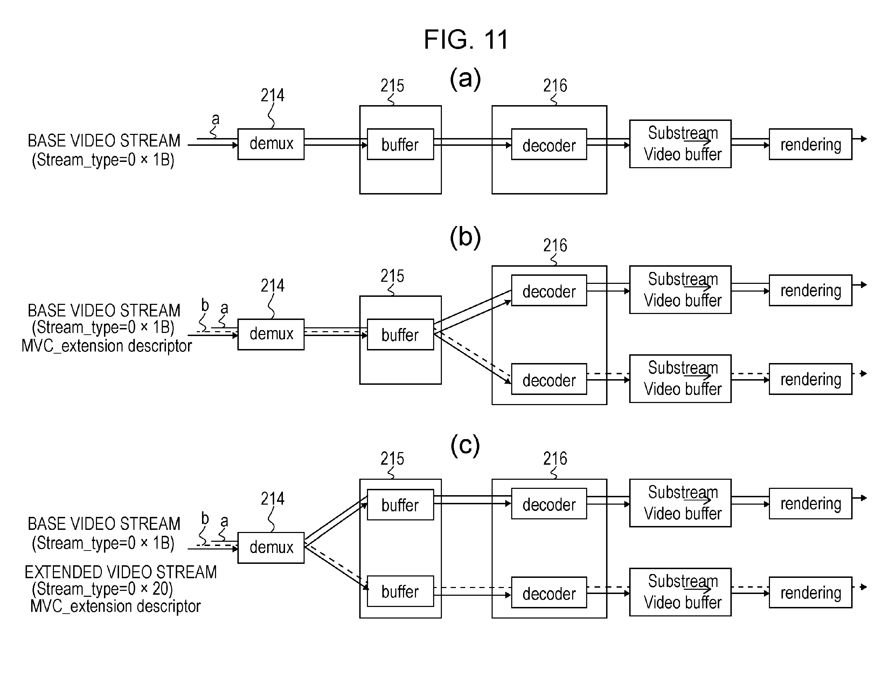

Fig. 11(b) schematically illustrates an example of the flow in the receiver 200 in this case. Note that this example is an example in which coded data of image data of a base view and coded data of image data one non-baseview are contained in a base video stream having a stream type (Stream type) of "0x1B". This example is also an example in which decode processing is performed on the items of coded data of individual views by using different decoders. The solid lines a indicate a flow of processing of image data of the base view, while the broken lines b indicate a flow of processing of image data of the non-baseview. The term "rendering" means processing in a scaler and the 3D view display processing unit 219.

Further, in step ST2, if an MVC extension descriptor is not present in the first ES loop, the CPU 201 determines in step ST4 whether or not an extended video stream (Stream_type=0x20) is present. If an extended video stream is present, the CPU 201 determines in step ST5 whether or not an MVC extension descriptor is present in a descriptor portion of a video elementary loop (second ES loop) corresponding to the extended video stream under PMT.

If an MVC extension descriptor is present in the second ES loop, in step ST6, the CPU 201 identifies that three-dimensional (3D) image transmission is being performed and that substreams are configured such that they are constituted by a plurality of streams. That is, the CPU 201 identifies that a service using a plurality of elementary streams (elementary streams) is being provided. Then, the CPU 201 performs control so that the management of buffers for coded data will be conducted for each substream (Substream) and the substreams will be subjected to decode processing.

Fig. 11(c) schematically illustrates an example of the flow in the receiver 200 in this case. Note that this example is an example in which there are two video streams: one base video stream including coded data of image data of a base view having a stream type (Stream type) of "0x1B"; and an extended video stream including coded data of image data of a non-baseview having a stream type (Stream type) of "0x20". The solid lines a indicate a flow of processing of image data of the base view, while the broken lines b indicate a flow of processing of image data of the non-baseview. The term "rendering" means processing in a scaler and the 3D view display processing unit 219.

On the other hand, if an extended video stream is not present in step ST4 or an MVC extension descriptor is not present in the second ES loop in step ST5, the CPU 201 performs control in step ST7 so that known, basic processing will be performed. Fig. 11(a) schematically illustrates an example of the flow in the receiver 200 in this case. Note that this example is an example in which only a base video stream including coded data of two-dimensional (2D) image data having a stream type (Stream type) of "0x1B" is present. The solid lines a indicate a flow of processing of two-dimensional image data. The term "rendering" means processing in a scaler and the 3D view display processing unit 219.

As discussed above, in the image transmitting/receiving system 10 shown in Fig. 1, when substreams are configured such that they are constituted by a single video stream, an MVC extension descriptor is inserted into a descriptor portion of a video elementary loop corresponding to a base video stream under PMT. On the other hand, when substreams are configured such that they are constituted by a plurality of streams, an MVC extension descriptor is inserted into a descriptor portion of a video elementary loop corresponding to an extended video stream under PMT.

Accordingly, it is possible for a reception side to reliably and easily identify before performing decoding whether substreams are configured such that they are constituted by a single video stream or a plurality of video streams. This enables the reception side to precisely determine, before performing decoding, the configuration of a buffer memory when decoding is performed and a decode mode and a display mode, thereby making it possible to obtain image data smoothly.

### <2. Modified Example>

Note that, in the above-described embodiment, an example in which the present technology is applied to an MVC stream has been described. That is, an example in which first image data is image data of a base view for performing three-dimensional (3D) image display and second image data is image data of non-base views for performing three-dimensional (3D) image display.

However, the present technology is applicable to an SVC stream in a similar manner. The SVC stream includes a video elementary stream of image data of the bottommost level, which forms scalable coded image data. This SVC stream also includes video elementary streams of items of image data of a predetermined number of higher levels other than the bottommost level, which form scalable coded image data.

In the case of this SVC stream, first image data is image data of a bottommost level, which forms scalable coded image data, and second image data is image data of a level other than the bottommost level, which forms the scalable coded image data. As in the above-described MVC stream, in this SVC stream, too, a case in which substreams are configured such that they are constituted by a single stream (see Fig. 4(a)) and a case in which substreams are configured such that they are constituted by a plurality of streams (see Fig. 4(b)) may be considered.

When substreams are configured such that they are constituted by a single stream, a video stream obtained by coding image data of the bottommost level and image data of a level other than the bottommost level as one picture is transmitted as an SVC base video stream. In this case, an SVC extension descriptor is inserted into a descriptor portion of a video elementary loop corresponding to the base video stream under PMT.

By inserting the SVC extension descriptor in this manner, a reception side is able to identify that an SVC stream is being transmitted and that substreams are configured such that they are constituted by a single video stream. That is, the reception side is able to identify that the transport stream TS contains a base video stream obtained by coding image data of the bottommost level and image data of a level other than the bottommost level as one picture.

On the other hand, when substreams are configured such that they are constituted by a plurality of streams, an elementary video stream obtained by coding image data of the bottommost level as one picture is transmitted as an SVC base video stream. Moreover, an elementary video stream obtained by coding image data of each of the levels other than the bottommost level as one picture is transmitted as an extended video stream. In this case, an SVC extension descriptor is inserted into a descriptor portion of a video elementary loop corresponding to an extended video stream under PMT.

By inserting the SVC extension descriptor in this manner, a reception side is able to identify that an SVC stream is being transmitted and that substreams are configured such that they are constituted by a plurality of streams. That is, the reception side is able to identify that the transport stream TS contains a base video stream including image data of the bottommost level and extended video streams, each including image data of a level other than the bottommost level.

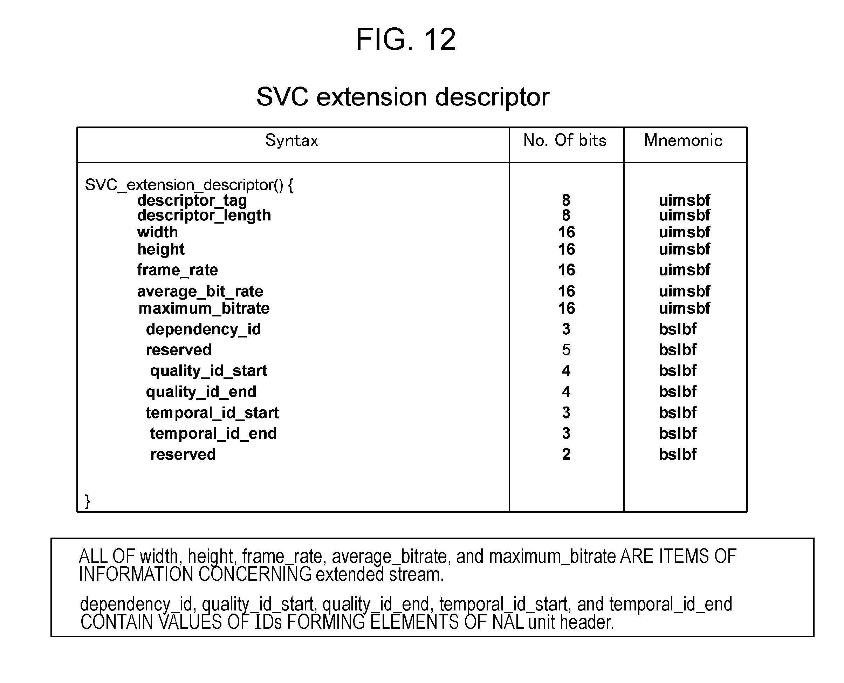

Fig. 12 illustrates an example of the structure (Syntax) of an SVC extension descriptor, though a detailed description of the entire descriptor will be omitted. The field "view order index_start" indicates the bottommost level number, and "view order index_end" indicates the topmost level number. By these items of information, the number of all levels can be identified. The field "dependency_id" indicates the ordinal number of the level corresponding to this descriptor.

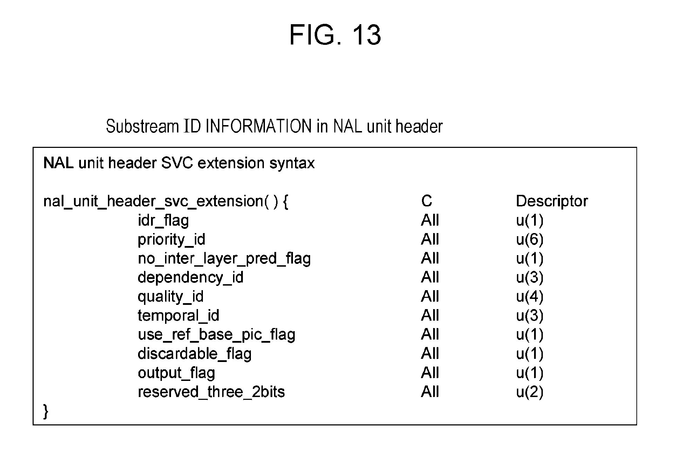

Fig. 13 illustrates an example of the configuration (Syntax) of an NAL unit header (NAL unit header SVC extension). The field "dependency_id" indicates the ordinal number of the corresponding level. That is, when decoding is performed, a reception side is able to identify, on the basis of field information concerning this field "dependency_id", to which level of image data each item of coded data corresponds.

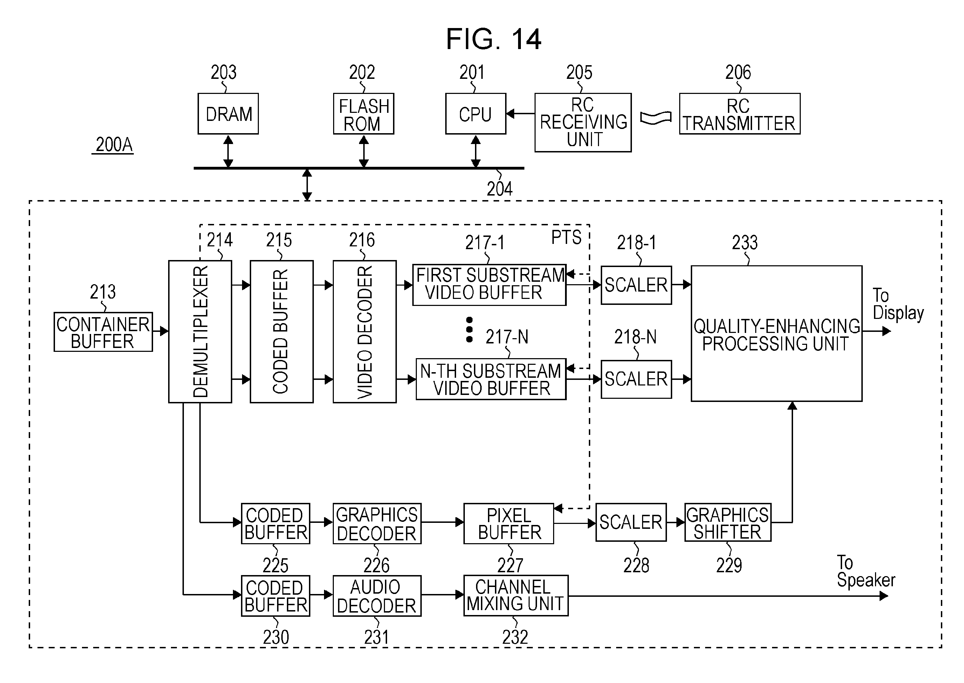

Fig. 14 illustrates an example of the configuration of a receiver 200A which handles the above-described SVC stream. In Fig. 14, elements corresponding to those shown in Fig. 9 are designated by like reference numerals, and a detailed explanation thereof will be omitted appropriately.

The receiver 200A receives a transport stream TS from the broadcast station 100 through broadcast waves. In this transport stream TS, when normal images are transmitted, an AVC (2D) video elementary stream is contained. On the other hand, when an SVC stream is transmitted, an SVC base video stream only or a predetermined number of extended video streams together with this SVC base video stream are contained in this transport stream TS.

On the basis of the presence and the insertion position of specific information in a layer of the transport stream TS, the receiver 200A processes a video stream contained in this transport stream TS. That is, the configuration of a buffer memory when decoding is performed and a decoding mode and a display mode are determined. The receiver 200A obtains image data for performing normal image display or image data of the bottommost level and image data of higher levels, and then displays normal images or high-quality images.

The receiver 200A determines whether an SVC extension descriptor is present in a descriptor portion of a video elementary loop (first ES loop) corresponding to the base video stream under PMT. Then, when a descriptor is present in the first ES loop, the receiver 200A identifies that an SVC stream is being transmitted and that this base video stream includes image data of the bottommost level and image data of higher levels. In this case, the receiver 200A decodes the base video stream contained in the transport stream TS so as to obtain items of image data of the individual levels for performing high-quality image display, and then displays high-quality images.

On the other hand, when an SVC extension descriptor is not present in the first ES loop, the receiver 200A determines whether an extended video stream is contained in the transport stream TS. Then, when an extended video stream is contained, the receiver 200A determines whether an SVC extension descriptor is present in a descriptor portion of a video elementary loop (second ES loop) corresponding to the extended video stream under PMT.

Then, when the descriptor is present in the second ES loop, the receiver 200A identifies that an SVC stream is being transmitted and that this extended video stream and the base video stream include image data of the bottommost level and image data of higher levels. In this case, the receiver 200A decodes a plurality of video streams contained in the transport stream TS so as to obtain items of image data of the individual levels for performing high-quality image display, and then displays high-quality images.

On the other hand, when there is no extended video stream contained in the transport stream TS or when an SVC extension descriptor is not present in the second ES loop, the receiver 200A identifies that normal images are being transmitted. In this case, the receiver 200A decodes the video stream contained in the transport stream TS so as to obtain normal image data, and then displays normal images.

In the demultiplexer 214, when an SVC stream is transmitted, an SVC extension descriptor is extracted from the transport stream TS and is sent to the CPU 201. In the CPU 201, on the basis of the presence and the insertion position of this SVC extension descriptor, the management of the coded buffer 215 and also the operation of the video decoder 216 are controlled so that they may match normal image transmission or SVC stream transmission.

One or a plurality of video elementary streams extracted by the demultiplexer 214 are supplied to the coded buffer 215 and are temporarily stored therein. In the video decoder 216, decode processing is performed on a video elementary stream stored in the coded buffer 215, thereby obtaining image data.

In this case, in the video decoder 216, when normal images are transmitted, decode processing is performed on an AVC video elementary stream by using one decoder, thereby obtaining image data for performing normal image display.

Also, in this case, when SVC frames are transmitted and if substreams are configured such that they are constituted by a single video stream, items of image data of a plurality of levels for performing high-quality image display are obtained by performing decode processing as follows. That is, for an SVC base video stream including coded data of items of image data of a plurality of levels, the decoder 216 switches a packet to be processed supplied from the buffer 215 to the decoder 216 on the basis of dependency_id of the NAL unit header, and then performs decode processing on each item of image data.

Also, in this case, when SVC frames are transmitted and if substreams are configured such that they are constituted by a plurality of streams, items of image data of a plurality of levels for performing high-quality image display are obtained by performing decode processing as follows. That is, data to be stored in the buffer 215 is switched on the basis of dependency_id of the NAL unit header of an NAL packet received from the demultiplexer 214. Thereafter, reading of compressed data from the buffer 215 and processing by the decoder 216 are performed similarly to that of decoding of a single stream. In this manner, on an SVC base video stream including coded data of image data of the bottommost level and a predetermined number of SVC extended video streams including coded data of items of image data of higher levels, decode processing is performed by using associated decoders.

In a quality-enhancing processing unit 233, when normal images are transmitted and if normal image display is performed, the following processing is performed. That is, graphics bitmap data output from the graphics shifter 229 is superposed on scaled image data input through, for example, the scaler 218-1, and the image data is output to a display.

On the other hand, in the quality-enhancing processing unit 233, when an SVC stream is transmitted and if high-quality image display is performed, the following processing is performed. That is, image data for performing high-quality image display is generated from items of scaled image data of individual levels input through, for example, the scalers 218-1 through 218-N, and graphics bitmap data subjected to shift processing output from the graphics shifter 229 is superposed on the image data, and the image data is output to a display.

In this manner, even when the present technology is applied to an SVC stream, it is possible for a reception side to reliably and easily identify before performing decoding whether substreams are configured such that they are constituted by a single video stream or a plurality of video streams. This enables the reception side to precisely determine, before performing decoding, the configuration of a buffer memory when decoding is performed and a decode mode and a display mode, thereby making it possible to obtain image data smoothly.

Additionally, in the above-described embodiment, an example in which a transport stream TS is distributed through broadcast waves. However, the present technology is applicable in a similar manner when this transport stream TS is distributed via a network, such as the Internet. On the other hand, it is needless to say that the present technology is applicable to a case of the Internet distribution of a container file format other than a transport stream TS.

Note that the present technology may also be implemented by the following configurations.
(1) An image data transmitting apparatus including:
   a transmitting unit that transmits a container having a predetermined format which contains a base video stream including first image data and a predetermined number of items of second image data related to the first image data; and
   an information inserting unit that inserts specific information into a position in a layer of the container at which information related to the base video stream is located.
(2) The image data transmitting apparatus according to (1), wherein the specific information is a descriptor having information concerning the first image data and the predetermined number of items of second image data.
(3) The image data transmitting apparatus according to (2), wherein:
   the container is a transport stream; and
   the information inserting unit inserts the descriptor into a descriptor portion of a video elementary loop corresponding to the base video stream under a program map table.
(4) The image data transmitting apparatus according to (2) or (3), wherein:
   the first image data is image data of a base view for performing three-dimensional image display;
   the second image data is image data of a view other than the base view for performing the three-dimensional image display; and
   the descriptor is an MVC extension descriptor having information concerning each of the views.
(5) The image data transmitting apparatus according to (2) or (3), wherein:
   the first image data is image data of a bottommost hierarchical level which forms scalable coded image data;
   the second image data is image data of a hierarchical level other than the bottommost hierarchical level which forms the scalable coded image data; and
   the descriptor is an SVC extension descriptor having information concerning the image data of each of the hierarchical levels.
(6) An image data transmitting method including:
   inserting, when transmitting a container having a predetermined format which contains a base video stream including first image data and a predetermined number of items of second image data related to the first image data, specific information into a position in a layer of the container at which information related to the base video stream is located.
(7) An image data transmitting apparatus including:
   a transmitting unit that transmits a container having a predetermined format which contains a base video stream including first image data and a predetermined number of extended video streams including a predetermined number of respective items of second image data related to the first image data; and
   an information inserting unit that inserts specific information into a position in a layer of the container at which information related to each of the predetermined number of extended video streams is located.
(8) The image data transmitting apparatus according to (7), wherein the specific information is a descriptor having information concerning the first image data and the predetermined number of items of second image data.
(9) The image data transmitting apparatus according to (8), wherein:
   the container is a transport stream; and
   the information inserting unit inserts the descriptor into a descriptor portion of a video elementary loop corresponding to each of the predetermined number of extended video streams under a program map table.
(10) The image data transmitting apparatus according to (8) or (9), wherein:
   the first image data is image data of a base view for performing three-dimensional image display;
   the second image data is image data of a view other than the base view for performing the three-dimensional image display; and
   the specific information is an MVC extension descriptor having information concerning each of the views.
(11) The image data transmitting apparatus according to (8) or (9), wherein:
   the first image data is image data of a bottommost hierarchical level which forms scalable coded image data;
   the second image data is image data of a hierarchical level other than the bottommost hierarchical level which forms the scalable coded image data; and
   the specific information is an SVC extension descriptor having information concerning the image data of each of the hierarchical levels.
(12) An image data transmitting method including:
   inserting, when transmitting a container having a predetermined format which contains a base video stream including first image data and a predetermined number of extended video streams including a predetermined number of respective items of second image data related to the first image data, specific information into a position in a layer of the container at which information related to each of the predetermined number of extended video streams is located.
(13) An image data receiving apparatus including:
   a receiving unit that receives a container having a predetermined format; and
   a processing unit that processes, on the basis of the presence and an insertion position of specific information in a layer of the container, a video stream contained in the container so as to obtain a predetermined number of items of image data related to each other.
(14) The image data receiving apparatus according to (13), wherein, when the specific information is inserted into a position in a layer of the container at which information related to a base video stream contained in the container is located, the processing unit processes the base video stream so as to obtain the predetermined number of items of image data.
(15) The image data receiving apparatus according to (13) or (14), wherein, when the specific information is inserted into a position in a layer of the container at which information related to an extended video stream contained in the container is located, the processing unit processes the extended video stream and a base video stream contained in the container so as to obtain the predetermined number of items of image data.
(16) The image data receiving apparatus according to any one of (13) to (15), wherein the predetermined number of items of image data form image data for performing three-dimensional image display or image data of scalable coded data.
(17) An image data receiving method including:
   a step of receiving a container having a predetermined format; and
   a step of obtaining a predetermined number of items of image data related to each other by processing a video stream contained in the container on the basis of the presence and an insertion position of specific information in a layer of the container.

A major feature of the present technology is that, by inserting an MVC extension descriptor into a descriptor portion of a video elementary loop, corresponding to an MVC base video stream or an extended video stream, under PMT, a reception side is able to reliably and easily identify before performing decoding whether substreams are configured such that they are constituted by a single video stream or a plurality of video streams (see Figs. 5, 7, and 8).

### Reference Signs List

- 10: image transmitting/receiving system
- 100: broadcasting station
- 110: transmission data generator
- 111: data extracting unit
- 111a: data recording medium
- 112: video encoder
- 113: parallax encoder
- 114: audio encoder
- 115: graphics generating unit
- 116: graphics encoder
- 117: multiplexer
- 200, 200A: receiver
- 201: CPU
- 213: container buffer
- 214: demultiplexer
- 215: coded buffer
- 216: video decoder
- 217-1: through 217-N substream buffer
- 218-1: through 218-N scaler
- 219: 3D view display processing unit
- 221: coded buffer
- 222: parallax decoder
- 223: video decoder
- 224: parallax information converting unit
- 225: coded buffer
- 226: graphics decoder
- 227: pixel buffer
- 228: scaler
- 229: graphics shifter
- 230: coded buffer
- 231: audio decoder
- 232: channel mixing unit
- 233: quality-enhancing processing unit

## Claims

1. An image data transmitting apparatus comprising:
a transmitting unit that transmits a container having a predetermined format which contains a base video stream including first image data and a predetermined number of items of second image data related to the first image data; and
an information inserting unit that inserts specific information into a position in a layer of the container at which information related to the base video stream is located.

2. The image data transmitting apparatus according to Claim 1, wherein the specific information is a descriptor having information concerning the first image data and the predetermined number of items of second image data.

3. The image data transmitting apparatus according to Claim 2, wherein:
the container is a transport stream; and
the information inserting unit inserts the descriptor into a descriptor portion of a video elementary loop corresponding to the base video stream under a program map table.

4. The image data transmitting apparatus according to Claim 2, wherein:
the first image data is image data of a base view for performing three-dimensional image display;
the second image data is image data of a view other than the base view for performing the three-dimensional image display; and
the descriptor is an MVC extension descriptor having information concerning each of the views.

5. The image data transmitting apparatus according to Claim 2, wherein:
the first image data is image data of a bottommost hierarchical level which forms scalable coded image data;
the second image data is image data of a hierarchical level other than the bottommost hierarchical level which forms the scalable coded image data; and
the descriptor is an SVC extension descriptor having information concerning the image data of each of the hierarchical levels.

6. An image data transmitting method comprising:
inserting, when transmitting a container having a predetermined format which contains a base video stream including first image data and a predetermined number of items of second image data related to the first image data, specific information into a position in a layer of the container at which information related to the base video stream is located.

7. An image data transmitting apparatus comprising:
a transmitting unit that transmits a container having a predetermined format which contains a base video stream including first image data and a predetermined number of extended video streams including a predetermined number of respective items of second image data related to the first image data; and
an information inserting unit that inserts specific information into a position in a layer of the container at which information related to each of the predetermined number of extended video streams is located.

8. The image data transmitting apparatus according to Claim 7, wherein the specific information is a descriptor having information concerning the first image data and the predetermined number of items of second image data.

9. The image data transmitting apparatus according to Claim 8, wherein:
the container is a transport stream; and
the information inserting unit inserts the descriptor into a descriptor portion of a video elementary loop corresponding to each of the predetermined number of extended video streams under a program map table.

10. The image data transmitting apparatus according to Claim 8, wherein:
the first image data is image data of a base view for performing three-dimensional image display;
the second image data is image data of a view other than the base view for performing the three-dimensional image display; and
the specific information is an MVC extension descriptor having information concerning each of the views.

11. The image data transmitting apparatus according to Claim 8, wherein:
the first image data is image data of a bottommost hierarchical level which forms scalable coded image data;
the second image data is image data of a hierarchical level other than the bottommost hierarchical level which forms the scalable coded image data; and
the specific information is an SVC extension descriptor having information concerning the image data of each of the hierarchical levels.

12. An image data transmitting method comprising:
inserting, when transmitting a container having a predetermined format which contains a base video stream including first image data and a predetermined number of extended video streams including a predetermined number of respective items of second image data related to the first image data, specific information into a position in a layer of the container at which information related to each of the predetermined number of extended video streams is located.

13. An image data receiving apparatus comprising:
a receiving unit that receives a container having a predetermined format; and
a processing unit that processes, on the basis of the presence and an insertion position of specific information in a layer of the container, a video stream contained in the container so as to obtain a predetermined number of items of image data related to each other.

14. The image data receiving apparatus according to Claim 13, wherein, when the specific information is inserted into a position in a layer of the container at which information related to a base video stream contained in the container is located, the processing unit processes the base video stream so as to obtain the predetermined number of items of image data.

15. The image data receiving apparatus according to Claim 13, wherein, when the specific information is inserted into a position in a layer of the container at which information related to an extended video stream contained in the container is located, the processing unit processes the extended video stream and a base video stream contained in the container so as to obtain the predetermined number of items of image data.

16. The image data receiving apparatus according to Claim 13, wherein the predetermined number of items of image data form image data for performing three-dimensional image display or image data of scalable coded data.

17. An image data receiving method comprising:
a step of receiving a container having a predetermined format; and
a step of obtaining a predetermined number of items of image data related to each other by processing a video stream contained in the container on the basis of the presence and an insertion position of specific information in a layer of the container.
